# EUROPEAN PATENT APPLICATION

(11) **EP 1 603 256 A1**
(43) Date of publication of application: **07.12.2005**
(21) Application number: 05253402.1
(22) Date of filing: 02.06.2005
(51) Int. Cl.: H04B 7/26, H04Q 7/22, H04Q 7/38

(54) **Circuit-switched communication system and method**

(30) Priority: 02.06.2004 GB 0412300
(71) Applicant: Vodafone Group PLC, Newbury Berkshire RG14 2FN (GB)
(72) Inventor: Fox, David, Reading RG30 2RB (GB); Carrizo Martinez, Jose Luis, Thatcham RG18 4QJ (GB); Khan, Atif, Newbury RG14 7EG (GB)
(74) Representative: Foster, Mark Charles

(57) **Abstract**

The invention provides a circuit-switched communication system, adapted to increase its transmission bandwidth capability by allocating additional time slot resources for both up-link and down-link transmissions. In one embodiment, the system in the time slot resource distribution within a given time frame is essentially asymmetric, but integrates to symmetry over time, for example by utilising a previously unallocated time slot (30, 40) for up-link and down-link transmissions in alternate frames. In another embodiment, the invention utilises a symmetrical distribution of additional time slot resource in each time frame.

## Description

This invention relates to circuit-switched communications systems and to operating methods therefor, and it relates particularly to such systems as are incorporated within the operating framework for the GSM/EDGE radio access network ("GERAN"). The acronyms "GSM" and "EDGE" represent the Global System for Mobile communication and Enhanced Data rates for Global Evolution respectively.

When mobile or cellular telecommunication systems were initially launched communication between mobile devices was limited solely to voice communication. This was later supplemented by the Short Message Service (SMS) and more recently Multimedia Messaging Service (MMS) technology and other data services, allowing users to send text, pictures and other data to other devices.

Data transmission is separate to a standard voice call - data are sent by connecting a mobile terminal to a server over a General Packet Radio Service (GPRS) data connection. Voice calls are transmitted conventionally by circuit switched connections, and GPRS data, of course, is transmitted by packet switched connections. The circuit switched domain was developed for the transmission of speech, and was therefore designed with the assumption that an equal amount of data would always be sent in each direction (i.e. transmitted and received) between terminals and that the end-to-end delay had to be kept below a given threshold, due to the nature of the voice communications. The packet switched domain is more flexible, and imposes no such constraints on the transmission of data.

Currently, GPRS operates with a fairly low bandwidth, and this limits data applications - such as high quality video conferencing.

As the standards and operating protocols for GERAN have developed, it has been found appropriate for network operators to incorporate both circuit-switched and packet-switched data transportation systems, running in parallel for different applications. The two systems are run in parallel because of their respective merits for different kinds of communications traffic. Thus, whilst packet-switching is preferred for the transmission of data, such as e-mail and Internet exchanges, circuit switching is considered more reliable for real-time applications, such as voice and video transmissions, for which quality of service is important. Also, existing circuit switched bearers have high capacity and quality and have been refined and improved over a long period of time, whereas packet-switched bearers are relatively new.

However, it is also the case that the transmission and reception parameters associated with circuit-switched systems are considerably more rigid than those for packet-based operation; a consequence of this rigidity being to impose firm limits on the transmission rates that can be accommodated. This presents particular problems for transmissions, such as video telephony transmissions for example, whose transmission rate demands are close to or in excess of the capabilities of those imposed by system parameters.

Difficulties thus arise in that certain traffic requirements dictate the use of circuit-switched systems, but the parameters controlling the operation of such systems cannot accommodate the transmission rates imposed by at least some kinds of such traffic (e.g. video telephony).

Even where the required transmission rates can be accommodated at cell locations where transmission/reception conditions are good, they can be severely curtailed at other cell locations, so that the reliability of communications links can vary considerably with location. This is of particular concern where a moving telecommunications device is used.

According to one aspect of the invention, there is provided a circuit-switched communication system, supported within GERAN, and having a predetermined number of time slots in each of a plurality of successive time frames nominally allocated for up-link and down-link transmissions, the system comprising means for utilising, for up-link and/or down-link transmissions, at least one time slot additional to said nominally allocated predetermined number in each frame, whereby the effective transmission rate of the system is increased.

By this means, the above-mentioned limitations upon transmission rate, and the associated reliability variation with location can be alleviated.

The invention also encompasses a method of operating a circuit-switched communication system, supported within GERAN, wherein the effective transmission rate of the system is increased by utilising at least one additional time slot in each time frame for the transmission of up-link and/or down-link communication traffic.

Regarding the aforementioned time slots, it will be appreciated that GSM data transmissions occur within time frames that are divided into eight time slots. Typically, seven of these slots are allocated to the performance of defined functions; two pairs of such slots being allocated respectively to transmission and reception of data. Since video telephony typically requires a transmission rate of 64Kbit/s, this dictates a requirement for each time slot allocated for transmission to transmit 32Kbit/s.

Whilst this may be achievable at locations near the centre of a cell, at other locations (e.g. near cell edges) where signal strengths may be lower, the aforementioned transmission rate is not reliably achievable and data transmission/reception may fail, or at least be compromised.

In a more specific aspect of the invention therefore, the system and method of the invention utilise the eighth, unallocated time slot for data transmission and reception in alternate frames. It will be appreciated that, when utilised in the EDGE system, the invention therefore increases the effective time available for transmission and reception to 2.5 time slots, thus reducing the overall data rate required for each time slot to:
(64Kbit/s ÷ 2.5), i.e. 25.6Kbit/s;
as opposed to the 32Kbit/s required in the absence of the invention.

Clearly this represents a significant relaxation in demand, thus permitting the circuit switched transmission links to be used with greater reliability over a greater proportion of cell locations.

Preferably, the system and the method of the invention are respectively adapted and operated such that unallocated time slots are used alternately for up-link and down-link transmissions, from frame to frame, whereby the alternating asymmetries in the down-link and up-link directions effectively integrate over several time frames to provide a pseudo-symmetrical system acceptable for circuit-switched operations.

A circuit-switched communication system and a method of operating a circuit-switched communication system, embodying the invention will now be described, by way of example only, with reference to the accompanying drawings of which:-
Figure 1 shows, in schematic block outline a timing diagram indicative of certain fundamental operating parameters associated with a system in accordance with one embodiment of the invention; and
Figure 2 shows, in similar format to Figure 1, a timing diagram indicative of the operation of a system according to a second embodiment of the invention.

As mentioned previously, GERAN can support 64kbit/s video telephony using enhanced circuit-switched data ("ECSD"), with a nominal allocation of two time slots each for transmissions in both up-link and down-link directions. This allocation thus places a 32kbit/s coding requirement on each time slot, requiring very good radio communication conditions, and is thus generally only possible at certain locations within a cell. Where, as is often the case, communications to/from a mobile telecommunications device are involved, this means that the reliability of the communications link is undesirably variable with location, and may indeed fail from place to place.

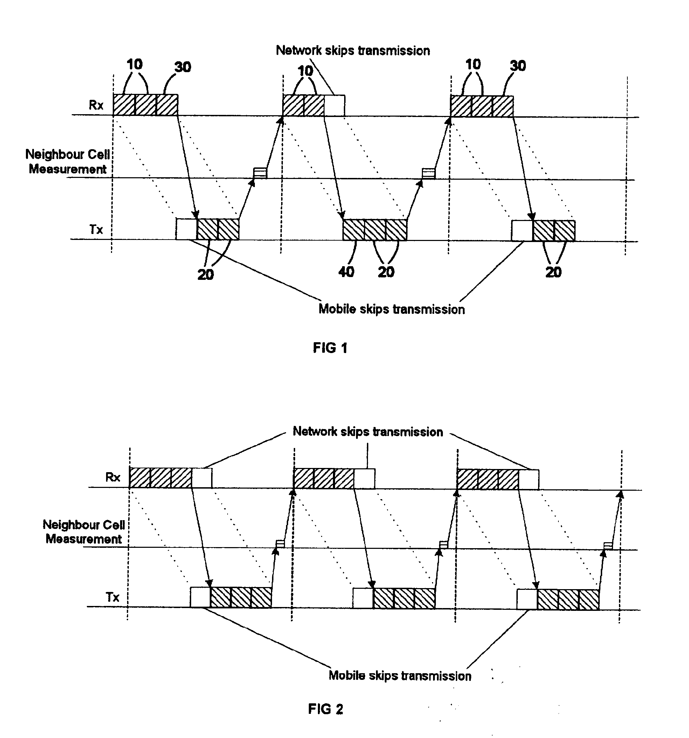

Referring now to Figure 1, three successive GSM time frames, bounded by vertical dashed lines, are shown; the two time slots nominally allocated for down link transmission in each frame being indicated at 10 and the two time slots nominally allocated for up-link transmission at 20. In accordance with this example of the invention, the arrangement is such that, in alternate time frames, the down-link channel is allocated a third (otherwise unused) time slot, shown at 30 whereas during intervening time frames, the up-link channel is allocated the third time slot, as shown at 40. Thus the up-link and down-link transmissions each utilise triple time slot allocations and double time slot allocations alternately in their respective, interleaving, sets of frame slots.

The foregoing embodiment of the invention thus permits the construction of a bi-directional communications channel making full use of the available time slots and, although for any given time frame there is an asymmetry as between the up-link and down-link channels, which is not normally associated with circuit-switched operation, the long-term balance between the two links is unaffected because of the alternation of the additional time slot allocation from up-link to down-link in alternate frames. The overall, integrated time slot allocation is thus effectively 2.5 for each link instead of just 2.0, providing the increased capacity and ruggedness of communications discussed above.

The invention thus makes it possible to either maximise a data rate that the transmission links can handle or alternatively, for a given lesser data rate, to increase redundancy and thus protect against communications lapses and ensure greater reliability of communications with changes in location.

It will be appreciated that the interleaving of additional time slot resources as between the down-link and the up-link need not be done on a strictly frame to frame basis. For example, it may be preferred to allocate the additional resource to the down-link for two or more successive time frames and then to allocate it to the up-link for a similar period. As a further alternative, it may be preferred to distribute the additional time slot allocation between the two links in accordance with a predetermined distribution protocol, which may usefully incorporate a pseudo-random distribution function.

As a further alternative, the distribution of additional time slot resources may be made "intelligent", in the sense of detecting whether there is, during any given communication, a predominant direction of data flow and preferentially allocating the additional resource more frequently in the appropriate direction.

Referring now to Figure 2, a second embodiment of the invention utilises additional time slot allocations to further increase bandwidth and/or ruggedness of transmission.

As indicated, the second embodiment of the invention allows both down-link and up-link transmissions to be consistently implemented over three time slots in each time frame. In this embodiment, the alignment of the up-link and down-link transmission time slots is shifted by one slot width.

The configuration of Figure 2 allows a mobile device to transmit and receive on three time slots simultaneously, with the benefit of providing the aforesaid additional bandwidth capability. However, it will be appreciated that this arrangement is somewhat wasteful of time slot resources as a whole, since the alignment of certain up-link and down-link slot allocations effectively wastes the down-link part of one time slot and the up-link part of another, thus effectively requiring four time slots per communication link.

Although the embodiments described relates to video telephony, it should be appreciated that the invention is applicable to transmission of any type of information - including speech and data.

## Claims

1. A circuit-switched communication system, supported within GERAN and having a predetermined number of time slots (10, 20) in each of a plurality of successive time frames nominally allocated for up-link and down-link transmissions, the system comprising means for utilising, for up-link and/or down-link transmissions, at least one time slot (30, 40) additional to said nominally allocated predetermined number in each frame, whereby the effective transmission rate of the system is increased.

2. A system according to claim 1 wherein said time slots (10, 20, 30, 40) comprise part of a GSM allocation of eight time slots per time frame.

3. A system according to claim 2 wherein said means for utilising is adapted to utilise a previously unallocated time slot (40, 30) for up-link and down-link transmissions in alternate frames, thereby to increase the effective time available for transmissions from 2.0 to 2.5 time slots.

4. A system according to claim 1 or claim 2 wherein said means for utilising is conditioned to utilise the unallocated time slots alternately for down-link and up-link transmission from frame to frame, such that alternating asymmetries as between the down-link and up-link transmissions effectively integrate over several time frames to provide a pseudo-symmetrical system acceptable for circuit-switched operations.

5. A system according to claim 1 or claim 2 wherein the means for utilising is configured to allocate an additional time-slot to down link transmissions for two or more successive time frames and then to up-link transmissions for a similar number of time frames.

6. A system according to claim 1 or claim 2 wherein the means for utilising is configured to distribute allocation of said at least one additional time slot between the two links in accordance with a predetermined distribution protocol.

7. A system according to claim 6 wherein said protocol incorporates a pseudo-random distribution function.

8. A system according to claim 1 or claim 2 wherein said means for utilising further comprises means for intelligently distributing said at least one additional time slot, and includes means for detecting whether there is, during any given communication, a predominant direction of data flow as between the up-link and down-link communications and, if so, for preferentially allocating said at least one additional time slot more frequently in the appropriate direction.

9. A method of operating a circuit-switched communication system, supported within GERAN, wherein the effective transmission rate of the system is increased by utilising at least one additional time slot (30, 40) in each time frame for the transmission of up-link and/or down-link communication traffic.

10. A method according to claim 9 wherein said time slots comprise part of a GSM allocation of eight time slots per time frame.

11. A method according to claim 10 which utilises a previously unallocated time slot (30, 40) for up-link and down-link data transmission in alternate frames, thereby to increase the effective time available for transmissions from 2.0 to 2.5 time slots.

12. A method according to claim 9 or claim 10 wherein the unallocated time slots are used alternately for up-link and down-link transmission, from frame to frame, whereby alternating asymmetries in down-link and up-link directions effectively integrate over several time frames to provide a pseudo-symmetrical system acceptable for circuit-switched operations.

13. A method according to claim 9 or claim 10 wherein the additional time slot is allocated to the down link for two or more successive time frames and then to the up-link for a similar number of time frames.

14. A method according to claim 9 or claim 10 wherein the allocation of additional time slots is distributed between the up-link and down-link in accordance with a predetermined distribution protocol.

15. A method according to claim 14 wherein said protocol incorporates, or is associated with, a pseudo-random distribution function.

16. A method according to claim 9 or claim 10 wherein an intelligent distribution of additional time slot resources is made by detecting whether there is, during any given communication, a predominant direction of data flow and preferentially allocating additional time slots more frequently in the appropriate direction.
